# EUROPEAN PATENT APPLICATION

(11) **EP 4 095 031 A1**
(43) Date of publication of application: **30.11.2022**
(21) Application number: 21176541.7
(22) Date of filing: 28.05.2021
(51) Int. Cl.: B64C 1/10, B64C 3/24, B64F 5/00, B29C 65/00

(54) **METHOD FOR MANUFACTURING A STRUCTURAL COMPONENT OF A VEHICLE AND STRUCTURAL COMPONENT**

(71) Applicant: Airbus Operations GmbH, 21129 Hamburg (DE)
(72) Inventor: VICHNIAKOV, Alexei, 21129 Hamburg (DE)
(74) Representative: Isarpatent

(57) **Abstract**

A method for manufacturing a structural component (10) of a vehicle comprises forming a first weldable structural subcomponent (1) as an enclosure, which surrounds a first welding cavity (1A) and is provided with a first access opening (1b) for accessing the first welding cavity;
forming a second weldable structural subcomponent (2) configured to fit through the first access opening;
inserting the second weldable structural subcomponent at least partially into the first welding cavity of the first weldable structural subcomponent through the first access opening such that the first weldable structural sub-component and the second weldable structural subcomponent overlap along a first welding area (5) within the first welding cavity;
and welding the second weldable structural subcomponent to the first structural component (10) at the first welding area (5) to form the structural component.

## Description

The present invention pertains to a method for manufacturing a structural component of a vehicle and to a structural component manufactured with such a method. The invention particularly pertains to the manufacture of structural components for aircraft.

Although it can be used in many applications, the present invention and the problems underlying it are explained in greater detail in relation to passenger aircraft. However, the methods and devices described can likewise be used in different vehicles and in all sectors of the transport industry, e.g. for road vehicles, for rail vehicles, for general aircraft or for watercraft.

In modern aircraft construction, structural components of aircraft are increasingly made of fiber composite materials due to their very high strength-to-weight ratio, e.g. carbon fiber reinforced plastics. To this end, the use of thermoplastic materials has recently been considered. Thermoplastics can be deformed within a certain temperature range and are thus ideally suited for thermoforming and in particular welding. By using thermoplastics, it is hoped that the manufacturing processes of large, complex structural components can be further simplified and automated.

Some parts of an aircraft are typically constructed as closed box-like structures, in which an outer skin, shell and/or enclosure is stabilized and stiffened by various inner structural elements like ribs, spars, stringers and so on. Fixed-wing passenger aircraft for example comprise a so-called wingbox, which forms the primary structural load carrying center of the wings and also serves as the attachment point for other wing components such as leading edge flaps, trailing edge flaps and wing-tip devices. The wingbox continues beyond the visible wing roots and interfaces with the fuselage, which forms the structural core of an aircraft. The wingbox is so called since, on many designs, the combination of the forward and rear wing spars and the upper and lower wing skins together form a natural "box" shape running through the wing. Various further components of aircraft are constructed as boxes, e.g. the empennage with vertical and horizontal tail planes, but also pylons, spoilers, flaps, rudders etc.

Recent developments for structural closed boxed parts made from composite materials are focused on an integral design. Typical design concepts for box-like and/or closed structures only offer limited space inside the respective structure, which makes it difficult to apply the energy and pressure required to join the inner structures to the outer skin by thermoplastic welding. Conventionally these parts are therefore manufactured in an integral way based on thermoset materials, which often requires complex tooling and operations like demolding, for example.

Against this background, it is an object of the present invention to find simple solutions for manufacturing large box-like structural components with integrally formed inner structural elements.

This object is achieved by a method having the features of claim 1 and a structural component having the features of claim 15.

According to the invention, a method for manufacturing a structural component of a vehicle comprises forming a first weldable structural subcomponent as an enclosure, which surrounds a first welding cavity and is provided with a first access opening for accessing the first welding cavity; forming a second weldable structural subcomponent configured to fit through the first access opening; inserting the second weldable structural subcomponent at least partially into the first welding cavity of the first weldable structural subcomponent through the first access opening such that the first weldable structural sub-component and the second weldable structural subcomponent overlap along a first welding area within the first welding cavity; and welding the second weldable structural subcomponent to the first structural component at the first welding area to form the structural component.

Further according to the invention, a structural component for a vehicle, in particular for an aircraft, is manufactured with a method according to the invention.

Thus, one idea of the present invention is to form an integral closed boxed-like structure by welding together two (or more) subcomponents. To this end, the sub-components are first inserted into each other at least partially, wherein a potential welding section is provided by any overlapping area along the surfaces of the sub-components within the welding cavity of one of the subcomponents. The required welding pressure and/or energy can then be easily applied due to an open access to the welding area. In this vein, even complex structures can be constructed using simple equipment by welding together several appropriately shaped subcomponents one after the other.

A weldable subcomponent within the meaning of the invention comprises any part that is formed at least in portions from a weldable material. Welding herein denotes a joining process, in which two or more parts are united, producing a continuity in the nature of the workpiece material(s) by means of heat or pressure or both, and with or without the use of filler material. Weldability of a material in that sense refers to its ability to be susceptible to welding, e.g. to an established extent with given processes and for given purposes when welding provides material integrity by a corresponding technological process for welded parts to meet technical requirements as to their own qualities as well as to their influence on a structure they form. Many metals and thermoplastics are in that sense weldable, for example.

The present invention is not limited to particular welding methods in order to manufacture structural components. It is to be understood that commonly known welding processes for joining metal and/or plastic parts with each other may be employed for the present purpose. Suitable welding methods comprise, for example, resistance welding (in case of metal materials or conductive filler materials like carbon fibers, metal meshes or the like), energy beam welding (laser, particle beam, x-ray etc.) and solid state welding (ultrasonic welding, infrared welding, induction welding etc.).

A box-like component according to the invention does not necessarily have a rectangular body but can be of basically any three-dimensional shape. Box-like or closed herein refers to the fact that the component forms an envelope, which encases an internal space that can be used to join structures to the envelope from the inside. A box-like component can have, for example, a disc- or ring-like shape that may be curved following the surface of a spherical shell, i.e., it may have a calotte shape at least in portions.

Advantageous embodiments and improvements of the present invention are found in the subordinate claims.

According to an embodiment of the invention, the first welding area may be accessed through the first access opening of the first weldable structural subcomponent and/or through a second access opening formed into the second weldable structural subcomponent.

The required welding pressure and/or energy can thus be applied due to the open access to the welding area by means of the first access opening and/or the second access opening. For example, the second weldable structural subcomponent may also be formed as an enclosure and/or hollow structure, which may have an opening along one or several sides, e.g. along a lateral side and/or at one or both lengthwise ends. The second weldable structural subcomponent may then be inserted into the first weldable structural subcomponent such that it protrudes from the first access opening with its second access opening pointing outwards, which may make it possible to access the first welding area by reaching through the second access opening into the second weldable structural subcomponent. In another example, the second weldable structural subcomponent may be completely inserted into the first weldable structural subcomponent with its second access opening pointing to the first access opening of the first weldable structural subcomponent. In that case, one may reach the first welding area by reaching through the first access opening and the second access opening. In yet another example, the second weldable structural subcomponent may be inserted at least partially into the first weldable structural subcomponent such that both subcomponents are left open on one or several sides, e.g. lengthwise ends of a longitudinal extension, which may then serve as access opening(s).

According to an embodiment of the invention, the first weldable structural sub-component and/or the second weldable structural subcomponent may be formed from a weldable material comprising a thermoplastic material and/or a metal material.

For example, the weldable material may be or may comprise any suitable thermoplastics like PEEK (polyether ether ketone), PEKK (polyetherketoneketone), PPS (polyphenylene sulfide), PPSU (polyphenylsulfone), PEI (polyetherimide) and other polymer materials. These materials provide a reliable and cost-effective way to reduce weight. More importantly, they add value beyond weight reduction for many applications due to unique properties advantageous to metallic components where their superior corrosion and fatigue resistance, tensile strength and durability can lead them to outperform metal.

Alternatively, or additionally, the weldable material may comprise any suitable metal, e.g. aluminum, steel, titanium etc., which may have advantages in certain applications. It is to be understood that the weldable material may be a composite material and/or material combination of several different materials.

According to an embodiment of the invention, the weldable material may be a fiber-reinforced composite material.

For example, the weldable material may be a glass laminate aluminum reinforced epoxy (GLARE), that is, a fiber metal laminate composed of several very thin layers of metal (usually aluminum) interspersed with layers of glass-fibers and bonded together with a matrix such as epoxy resin. Uni-directional pre-preg fiber layers may be used and aligned in different directions to suit predicted stress conditions. Also other fiber metal laminates may be suitable depending on the application.

In another example, a fiber reinforced polymer may be used as weldable material having a thermoplastic polymer as matrix material for binding the fibers together. Suitable fibers may comprise carbon, glass and/or aramid fibers or the like.

According to an embodiment of the invention, the structural component may be formed as a box structure for an aircraft.

In this regard, the invention offers unique and unprecedented possibilities for the manufacture of large and complex structural components in an integral way. More specifically, the invention offers not only the possibility to replace the assembly of conventional box-like structures by an integral design. In addition, structural components may be formed in a box-like and hollow and therefore weight saving design that are usually provided as massive and/or monolithic components or as complex assemblies of separate components that are connected by various fastening means like bolts, nuts and so on.

According to an embodiment of the invention, the structural component may be formed as a wingbox, an empennage box, a pylon box, a spoiler, a flap and/or a bulkhead or the like.

In one specific example, the invention offers the possibility to construct a pressure bulkhead or other components that have an axially symmetric and/or circular design in an integral way, e.g. on basis of weight-saving thermoplastic composites.

According to an embodiment of the invention, the second weldable structural sub-component may be formed as a stiffening element for the structural component. Hence, the second weldable structural subcomponent may function as a stiffener, stringer, spar, rib or other part that provides stability and/or that carries loads. The subcomponent may thus in particular have an elongated shape and be bent into various profile shapes as they are conventionally used for this purpose, e.g. Z, C, L, Ω and so on. In that case, the second subcomponent may be introduced in the welding cavity substantially in its entirety and may be joined to the first subcomponent substantially along its entire longitudinal and/or lateral extension.

According to an embodiment of the invention, the second weldable structural sub-component may be formed as a stiffening rib and arranged within the first welding cavity to stiffen the first weldable structural subcomponent.

By following the approach of the present invention, a wingbox including skin, ribs and/or spars may be formed from a thermoplastic in an integral way, for example. To this end, one subcomponent may be provided as the outer enclosure of the wingbox. Ribs and/or spars may then be formed by introducing correspondingly shaped subcomponents one after the other into the cavity of the enclosure and by joining them there to the enclosure.

According to an embodiment of the invention, the first weldable structural sub-component and the second weldable structural subcomponent may be nested within each other such that the second weldable structural subcomponent protrudes from the access opening.

In this vein, the above mentioned wingbox, or any other hollow structure stiffened by internal members, may also be formed by nesting two or more subcomponents into each other, wherein stiffening elements may be formed by portions of the respective subcomponents.

According to an embodiment of the invention, the second weldable structural sub-component may be configured and arranged within the first welding cavity such that it bridges opposing faces of the first weldable structural subcomponent within the first welding cavity, the opposing faces being part of the first welding area.

Hence, rip- or spar-like portions may be formed inside the structural component simply be nesting appropriately shaped subcomponents within each other, wherein the bridging portions of one subcomponent connect to opposing face of the other subcomponent within the cavity in the same way as a conventionally attached stiffening member would connect the faces.

According to an embodiment of the invention, the first weldable structural sub-component may be formed as at least a portion of a ring or a disc. The first access opening may run at least partially around a circumference of the first weldable structural subcomponent. The second weldable structural subcomponent may be formed as at least a portion of a ring having a diameter larger than a diameter of the first weldable structural subcomponent.

In one specific example, the invention offers the possibility to construct a pressure bulkhead or other components that have an axially symmetric and/or circular design in an integral way, e.g. on basis of weight-saving thermoplastic composites.

According to an embodiment of the invention, the first access opening may be oriented radially outwards and the second weldable structural subcomponent may be introduced and joined from radially outwards to the first weldable structural sub-component.

Joining two or more of these subcomponents with each other a disc- or ring-like shaped component may be built part by part radially outwards in a very simple and straightforward manner. This is even possible in case the component is curved in an axial direction, e.g. following the surface of a spherical shell at least in parts, which means that a curved calotte may be formed. The invention may thus be used to build a pressure-bulkhead as a boxed, yet integrally formed component from a thermoplastic composite like CFRP and/or a metal-composite like GLARE, for example.

Passenger aircraft usually have a pressure bulkhead at one rear axial end in order to maintain the internal pressure of a passenger cabin at a suitable level, e.g. atmospheric pressure, even at high altitudes. To this end, the pressure bulkhead creates a pressure seal between the passenger cabin and the primary structure of the aircraft fuselage. In modern aircraft construction, the aim is to save as much weight as possible while at the same time achieving sufficient rigidity and robustness to withstand the diverse loads that occur. For this purpose, pressure bulkheads are usually made of metallic materials such as aluminum or an aluminum alloy and/or fiber-reinforced composite materials. In this respect, metallic pressure bulkheads can often be manufactured more cost-effectively than pressure bulkheads made of such a fiber composite material, but typically have a significantly greater weight.

In typical embodiments, the actual pressure bulkhead has a dome-like basic shape that bulges in the rear direction of the aircraft, also known as a pressure calotte. Pressure calottes are typically further provided with elongated and/or net-like stiffening elements in areas subject to particular load stresses and generally comprise further structural elements required for pressure-tight sealing of the relevant aircraft fuselage region and for transferring the forces resulting from the internal pressure into the fuselage shell structure of the aircraft. For example, the pressure bulkhead can be connected to one or more surrounding frames and/or an outer skin of the fuselage via intermediate pieces and other components.

On basis of the present invention, such a pressure bulkhead may now be formed in an integral and cost-effective way, e.g. as a fiber-reinforced composite based on a thermoplastic polymer or aluminum as matrix material.

According to an embodiment of the invention, the second weldable structural sub-component may be formed as an enclosure, which surrounds a second welding cavity and is provided with a second access opening for accessing the second welding cavity. The method may further comprise forming a third weldable structural subcomponent configured to fit through the second access opening; inserting the third weldable structural subcomponent at least partially into the second welding cavity of the second weldable structural subcomponent through the second access opening such that the second weldable structural subcomponent and the third weldable structural subcomponent overlap along a second welding area within the second welding cavity, wherein the second welding area is accessible through the second access opening and/or through a third access opening formed into the third weldable structural subcomponent; and welding the third weldable structural subcomponent to the second structural component at the second welding area to form the structural component.

Hence, the invention may be generalized to three, four or more weldable structural subcomponents, which are attached to each other one after the other. In this vein, also complex structures may be assembled, e.g. from a thermoplastic, in an integral way that could basically not be constructed with conventional joining methods. According to an embodiment of the invention, the first weldable structural sub-component, the second weldable structural subcomponent and the third structural component may be nested within each other such that the third weldable structural subcomponent protrudes from the second access opening and the second weldable structural subcomponent protrudes from the first access opening.

Also in this generalized case, each access opening may be oriented radially outwards such that each subsequent weldable structural subcomponent may be introduced and joined from radially outwards to the prior weldable structural subcomponent.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a cross-sectional view of several weldable structural subcomponents according to an embodiment of the invention to be joint to a structural component of an aircraft by welding.
Fig. 2 schematically depicts a cross-sectional detail view of two of the subcomponents of Fig. 1 during welding.
Fig. 3 schematically depicts the final structural component after welding the sub-components of Fig. 1 together.
Fig. 4 schematically shows a passenger aircraft with several structural component according to embodiments of the invention.
Fig. 5 shows a schematic flow diagram of a method according to an embodiment of the invention for welding together subcomponents to the structural component as shown in Fig. 1 to 4.
Fig. 6 to 8 show another embodiment of a structural component according to the invention during subsequent manufacturing steps.
Fig. 9 to 11 show several structural components according to further embodiments of the invention.
Fig. 12 to 14 show the construction of a structural component according to yet another embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

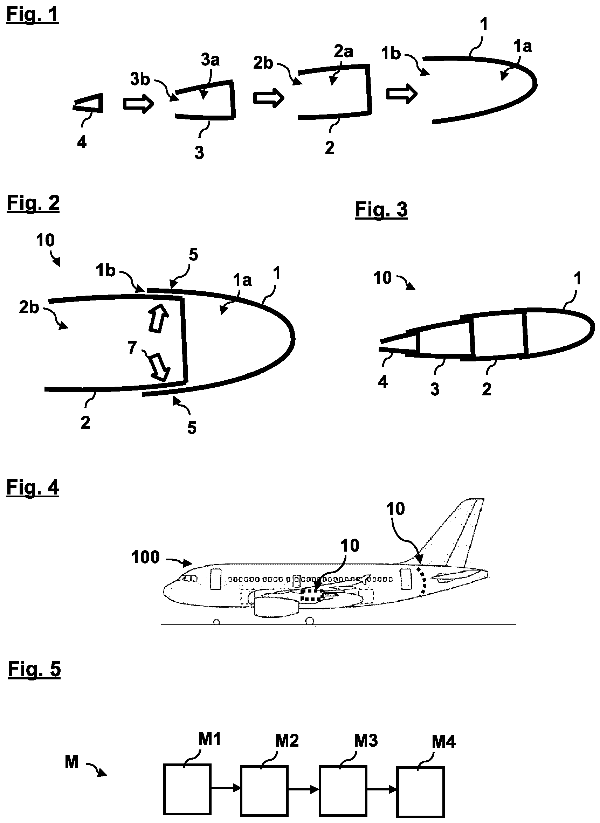

Figure 1 schematically depicts a cross-sectional view of several weldable structural subcomponents 1, 2, 3, 4 according to an embodiment of the invention to be joint to a structural component 10 of an aircraft 100 by welding. Fig. 2 schematically depicts a cross-sectional detail view of two of the subcomponents 1, 2 of Fig. 1 during welding, while Fig. 3 schematically depicts the final structural component 10 after welding the subcomponents 1, 2, 3, 4 of Fig. 1 together. The corresponding method M is depicted in Fig. 5 as a schematic flow diagram.

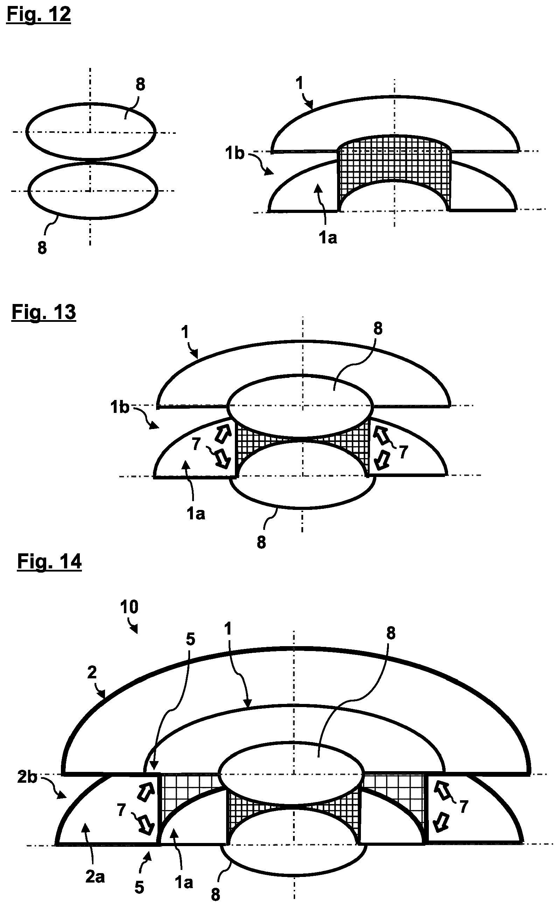

In the particular example of Figs. 1 to 3, the structural component 10 is a wingbox of an aircraft 100, e.g. the aircraft 100 shown in Fig. 4. However, also other structural components 10 of the aircraft 100 may be formed with the method M as it is described in the following. In the example of Fig. 4, in addition, also a pressure bulkhead of the aircraft 100 is formed with the method M of Fig. 5. Details of the construction are elaborated further below with reference to Figs. 12 to 14.

The depicted aircraft 100 may be, for example, a passenger aircraft, e.g., a narrow-body aircraft, having a pressurized passenger cabin maintained under atmospheric pressure and located within a fuselage of the aircraft 100. The structural component 10 configured as a pressure bulkhead may then form a pressure-tight closure of the pressurized fuselage of the aircraft 100 with respect to a tail region of the aircraft 100 in an axial direction. The passenger cabin/deck may extend, for example, along the entire longitudinal extent of the pressurized fuselage from a cockpit (not shown) to the pressurized bulkhead 10. The illustrated embodiment of the aircraft 100 is to be understood as an example of a general passenger aircraft only. Likewise, for example, other passenger decks, cargo decks, etc. may be provided, e.g., two passenger decks located one below the other.

With reference to Fig. 5 (cf. also Fig. 2), the method M comprises under M1 forming a first weldable structural subcomponent 1 as an enclosure, which surrounds a first welding cavity 1a and is provided with a first access opening 1b for accessing the first welding cavity 1a. Further, the method M comprises under M2 forming a second weldable structural subcomponent 2 configured to fit through the first access opening 1b. Next, the method M comprises under M3 inserting the second weldable structural subcomponent 2 at least partially into the first welding cavity 1a of the first weldable structural sub-component 1 through the first access opening 1b such that the first weldable structural subcomponent 1 and the second weldable structural subcomponent 2 overlap along a first welding area 5 within the first welding cavity 1a.

As can be seen in Fig. 2, for example, the sub-components 1, 2 are configured such that the first welding area 5 is still accessible through the first access opening 1b after the second weldable structural subcomponent 2 has been introduced in the first welding cavity 1a. Thanks to this, the method M in a next step can include under M4 welding the second weldable structural subcomponent 2 to the first weldable structural component 1 at the first welding area 5 to form the structural component 10. To this end, pressure 7 (and/or force) may be applied from inside the first welding cavity 1a to both overlapping subcomponents 1, 2 within the first welding area 5. Welding energy may also be applied from the inside and/or the outside.

In this vein, several subcomponents 1, 2, 3, 4 can be nested within each other one after the other such that each subsequent structural subcomponent 1, 2, 3, 4 protrudes from the respective prior structural subcomponent 1, 2, 3, 4 (cf. arrows in Fig. 1). In this particular example, the second, third and fourth weldable structural subcomponents 2, 3, 4 are configured and arranged within the respective welding cavities 1a, 2a, 3a such that the respective subcomponent 2, 3, 4 bridges opposing faces of the respective prior structural subcomponent 1, 2, 3 (cf. Fig. 3). Thereby, the inserted subcomponents 2, 3, 4 function as stiffening elements inside the structural component 10 much as a rib or spar stiffen a conventionally formed component.

The weldable structural subcomponents 1, 2, 3, 4 may be formed from a weldable material, in particular a thermoplastic- and/or metal-based fiber-reinforced composite material like GLARE or CFRP or the like, which provide particular benefits for integrally joining different components by welding. In that respect, the usual welding processes as they are known to the person of skill for joining metal and/or plastic parts with each other may also be employed for the present purpose. Suitable welding methods comprise, for example, resistance welding (in case of metal materials or conductive fibers like carbon fibers), energy beam welding (laser, particle beam, x-ray etc.) and solid state welding (ultrasonic welding, infrared welding, induction welding etc.).

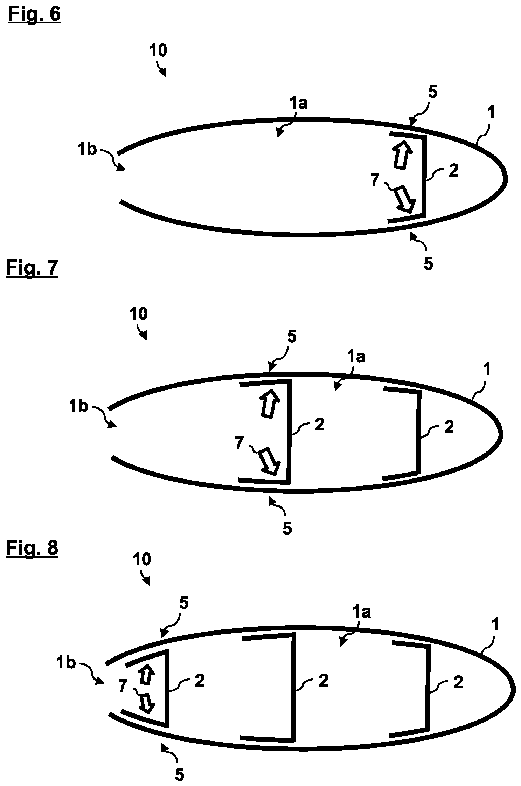

Figs. 6 to 11 depict manufacturing methods M according to alternative embodiments of the invention for producing the same or at least a similar structural component 10 as the one shown in Figs. 1 to 3 (i.e., a wingbox in the example).

In the embodiment of Figs. 6 to 8, a hollow first weldable structural subcomponent 1 is provided as outer shell of the wingbox, which has an access opening 1b on one side. Next, three further subcomponents 2 are introduced in the inner welding cavity 1a of the first subcomponent 1. Each further subcomponent 2 is shaped as a stiffening rib having a C-profile, wherein the flanges (or legs) of the C are used as welding surfaces and the central web serves as the actual rib connecting opposing sides or faces of the first weldable structural subcomponent 1 within the cavity 1a. Due to the open access to the inside of the first weldable structural subcomponent 1 the further subcomponents 2 can be welded one after the other to the inside of the first weldable structural subcomponent 1 by applying pressure 7 from the inside and energy from either side.

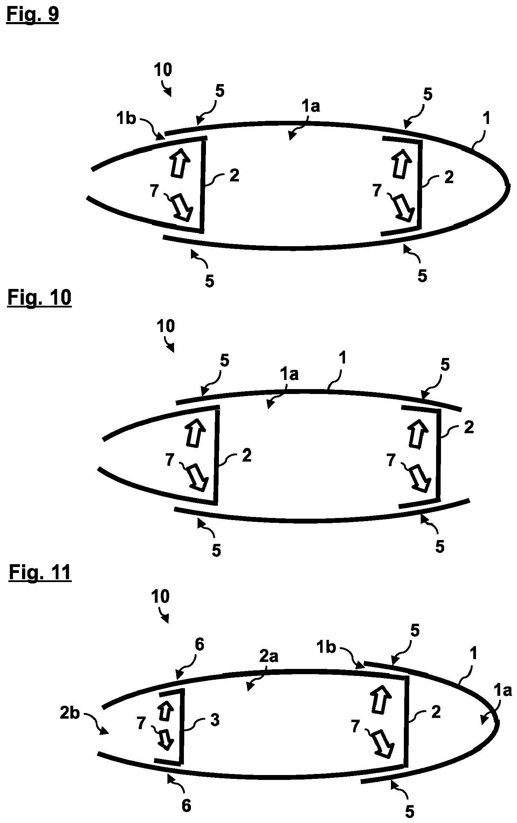

The embodiments of Figs. 9 to 11 are alternative mixed arrangements of subcomponents 1, 2 serving as part of an outer shell, an inner stiffening element or both at the same time (e.g. subcomponent 2 on the left of Fig. 10).

Figs. 12 to 14 on the other hand exemplify an embodiment of the invention with axial symmetry, which may be used, for example, to manufacture a pressure bulkhead in an integral way from weldable materials (cf. Fig. 4).

In that case, the first weldable structural subcomponent 1 is formed as a ring with the first access opening 1b running around a circumference of the first weldable structural subcomponent 1 (cf. Fig. 12 on the right). The second weldable structural subcomponent 2 is also formed as a ring, however with a diameter larger than a diameter of the first weldable structural subcomponent 1 (Fig. 14). The first access opening 1b is oriented radially outwards such that the second weldable structural subcomponent 2 can be introduced and joined from radially outwards to the first weldable structural subcomponent 1, as shown in Fig. 14. In that vein, a third, fourth and so on similarly configured ring elements may be added to the first two, thereby building up an axially symmetric disc in a boxed configuration. A remaining axial hole may be covered by one or several center plates 8, which may be welded to the innermost subcomponent ring, as shown in Fig. 12 and 13.

Figs. 12 to 14 are to be understood as mere schematic illustrations of the concepts. It will be clear to the person of skill that the shown arrangement can be provided in a curved configuration with a calotte-like shape in order to build a pressure bulkhead as they are usually employed on aircraft.

Thermoplastics materials and technologies as they can be used with the present invention allow radical change of structure manufacturing and assembly, in particular for large vehicles like aircraft. Thermoplastic forming of elementary parts implies low manufacturing costs of these elementary parts (fast lay-up of main laminates, short consolidation cycles, no clean room/freezers/autoclaves required). Moreover, the capability for welding implies a low cost assembly with significant reduction of drilling work, costly fasteners/bolts and auxiliary materials and waste.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: first weldable structural subcomponent
- 1a: first welding cavity
- 1b: first access opening
- 2: second weldable structural subcomponent
- 2a: second welding cavity
- 2b: second access opening
- 3: third weldable structural subcomponent
- 3a: third welding cavity
- 3b: third access opening
- 4: fourth weldable structural subcomponent
- 5: first welding area
- 6: second welding area
- 7: pressure
- 8: center plate
- 10: structural component
- 100: aircraft
- M: method
- M1-M4: method steps

## Claims

1. Method (M) for manufacturing a structural component (10) of a vehicle, in particular of an aircraft (100), the method (M) comprising:
forming (M1) a first weldable structural subcomponent (1) as an enclosure, which surrounds a first welding cavity (1a) and is provided with a first access opening (1b) for accessing the first welding cavity (1a);
forming (M2) a second weldable structural subcomponent (2) configured to fit through the first access opening (1b);
inserting (M3) the second weldable structural subcomponent (2) at least partially into the first welding cavity (1a) of the first weldable structural sub-component (1) through the first access opening (1b) such that the first weldable structural subcomponent (1) and the second weldable structural subcomponent (2) overlap along a first welding area (5) within the first welding cavity (1a); and
welding (M4) the second weldable structural subcomponent (2) to the first weldable structural component (1) at the first welding area (5) to form the structural component (10).

2. Method (M) according claim 1, wherein the first welding area (5) is accessed through the first access opening (1b) of the first weldable structural sub-component (1) and/or through a second access opening (2b) formed into the second weldable structural subcomponent (2).

3. Method (M) according claim 1 or 2, wherein the first weldable structural subcomponent (1) and/or the second weldable structural subcomponent (2) are formed from a weldable material comprising a thermoplastic material and/or a metal material.

4. Method (M) according to claim 3, wherein the weldable material is a fiber-reinforced composite material.

5. Method (M) according to one of the claims 1 to 4, wherein the structural component (10) is formed as a box structure for an aircraft (100).

6. Method (M) according claim 5, wherein the structural component (100) is formed as at least one of a wingbox, an empennage box, a pylon box, a spoiler, a flap and a bulkhead.

7. Method (M) according to one of the claims 1 to 6, wherein the second weldable structural subcomponent (2) is formed as a stiffening element for the structural component (10).

8. Method (M) according to claim 7, wherein the second weldable structural subcomponent (2) is formed as a stiffening rib and arranged within the first welding cavity (1a) to stiffen the first weldable structural subcomponent (1).

9. Method (M) according to one of the claims 1 to 8, wherein the first weldable structural subcomponent (1) and the second weldable structural subcomponent (2) are nested within each other such that the second weldable structural subcomponent (2) protrudes from the first access opening (1b).

10. Method (M) according to claim 9, wherein the second weldable structural subcomponent (2) is configured and arranged within the first welding cavity (1a) such that it bridges opposing faces of the first weldable structural sub-component (1) within the first welding cavity (1a), the opposing faces being part of the first welding area (5).

11. Method (M) according to one of the claims 1 to 10, wherein the first weldable structural subcomponent (1) is formed as at least a portion of a ring or a disc, the first access opening (1b) running at least partially around a circumference of the first weldable structural subcomponent (1), and wherein the second weldable structural subcomponent (2) is formed as at least a portion of a ring having a diameter larger than a diameter of the first weldable structural subcomponent (1).

12. Method (M) according to claim 11, wherein the first access opening (1b) is oriented radially outwards and the second weldable structural subcomponent (2) is introduced and joined from radially outwards to the first weldable structural subcomponent (1).

13. Method (M) according to one of the claims 1 to 12, wherein the second weldable structural subcomponent (2) is formed as an enclosure, which surrounds a second welding cavity (2a) and is provided with a second access opening (2b) for accessing the second welding cavity (2a), the method (M) further comprising:
forming a third weldable structural subcomponent (3) configured to fit through the second access opening (2b);
inserting the third weldable structural subcomponent (3) at least partially into the second welding cavity (2a) of the second weldable structural sub-component (2) through the second access opening (2b) such that the second weldable structural subcomponent (2) and the third weldable structural subcomponent (3) overlap along a second welding area (6) within the second welding cavity (2a), wherein the second welding area (6) is accessible through the second access opening (2b) and/or through a third access opening (3b) formed into the third weldable structural subcomponent (3); and
welding the third weldable structural subcomponent (3) to the second structural component (2) at the second welding area (6) to form the structural component (10).

14. Method (M) according to claim 13, wherein the first weldable structural sub-component (1), the second weldable structural subcomponent (2) and the third structural component (3) are nested within each other such that the third weldable structural subcomponent (3) protrudes from the second access opening (2b) and the second weldable structural subcomponent (2) protrudes from the first access opening (1b).

15. Structural component (10) for a vehicle, in particular for an aircraft (100), which is manufactured with a method (M) according to one of the claims 1 to 14.
